# EUROPEAN PATENT APPLICATION

(11) **EP 2 133 833 A1**
(43) Date of publication of application: **16.12.2009**
(21) Application number: 09162599.6
(22) Date of filing: 12.06.2009
(51) Int. Cl.: G06Q 10/00

(54) **Tool, method and system for project management**

(30) Priority: 12.06.2008 US 137825
(71) Applicant: Dunin Technologie Inc., Sherbrooke QC J1H 1Z3 (CA)
(72) Inventor: Dumoulin, Serge, Sherbrooke Québec J1C 0V1 (CA)
(74) Representative: Collin, Jérôme

(57) **Abstract**

The present invention relates to a method, a system and a tool for dynamically optimizing project management. The method, system and tool divide at least one project in sub-elements and define a plurality of paths, each path comprising at least one unit. They further define a plurality of amalgams corresponding to one of the path to be followed by at least one sub-element. Then, they calculate a weight for each of the plurality of amalgams based on predetermined factors, the weight corresponding to a prioritization level for each of the sub-elements of the amalgams in execution of the units.

## Description

### FIELD OF THE INVENTION

The present invention relates to project management, and more precisely to a tool, a method and a system for providing real time project management.

### BACKGROUND OF THE INVENTION

Manufacturing has changed tremendously in the past decades. From a completely manual process to a fully automated process, many steps and variants have been used and improved. With the costs involved in maintaining stocks, many companies have migrated to the concept of "Just In Time (JIT)". This concept aims at optimizing the manufacturing process in such a way that stocks of raw material is limited to a minimum, so as to reduce the costs of maintaining and storing stocks.

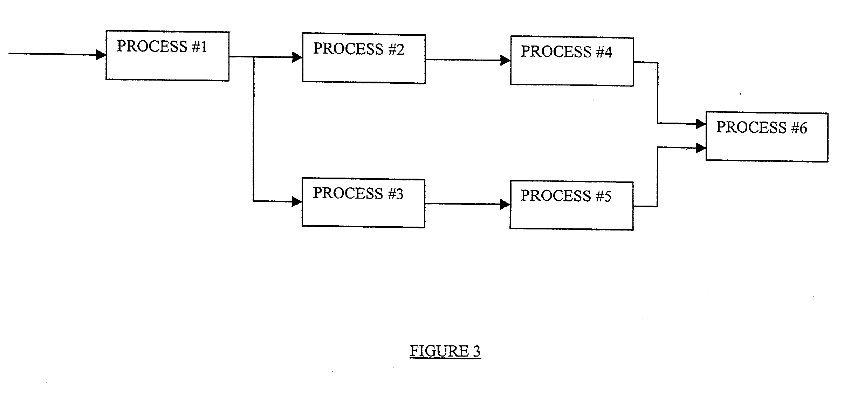

Although the JIT concept proves very beneficial from a financial standpoint, its implementation requires considerable planning and management to be successful. United States Patent Application published as 2006/0112025 describes a method and a system for optimizing a JIT manufacturing process. This published application uses three distinct sources of data and fuzzy logic to determine the optimal process based on the data. This method and system can also be used for manufacturing customized products as shown on Figure 3. For doing so, this published application relies on the concept of membership for each set of expert data, so as to correlate the three distinct sources of data, thereby generating an optimized process map. The optimization achieved by this patent is punctual, as the process is optimized upon generation, and no dynamic optimization mechanism is performed subsequently. A major drawback of this method lies in the fact that it is not possible to design a process, which takes under account all possible variants happening during manufacturing.

Another patent of interest is United States Patent no. 5,751,580. This patent relates to a method and a system for optimizing a manufacturing process using fuzzy logic along with a prioritization mechanism. Each lot awaiting semiconductor wafer fabrication is given an initial priority. Along its fabrication in the manufacture, the priority of the lot is revised, based on a series of predetermined factors, through the use of penalties and bonuses assigned in real time. Although this method prioritizes dynamically and in real time the production of the lots, this method is applicable to manufacturing processes being sequential, i.e. having a series of steps to be performed always in the same order. In the present method, the concept of lot refers to semiconductor wafers, for which the process of fabrication is identical from one lot to the next, the only variant lying in the design to be incorporated in the semiconductor wafer.

It would thus be an advantage to have a method and system for project management which is optimized in real-time, and which can be functional for projects requiring multidimensional processes.

### SUMMARY OF THE INVENTION

The present invention relates to a method, system and tool for performing dynamic project management optimized in real-time. For doing so, the method of the present invention divides at least one project in sub-elements and defines a plurality of paths, each path comprising at least one unit. The method then defines a plurality of amalgams, each amalgam corresponding to one of the path to be followed by at least one sub-element. Then, the method calculates a weight for each of the plurality of amalgams based on predetermined factors and/or a set of rules, the weight corresponding to a prioritization level for each of the sub-elements of the amalgams in execution of the units

In another aspect, the present invention relates to a system for project management. The system comprises a memory, a processor and a calculation unit. The memory is adapted for storing a plurality of processes and sets of rules: each process comprising a series of units, at least one set of rules defining rules to be applied for dividing of projects in sub-elements, at least one other set of rules defining rules to be applied for defining grouping of processes in paths, and at least one other set of rules defining rules to be applied for grouping of sub-elements into amalgams. The processor being adapted for applying the at least one set of rules and dividing the projects in sub-elements, for applying the at least one other set of rules for grouping units in paths, and for applying the at least one other set of rules for grouping the sub-elements into amalgams. The calculation unit being adapted for calculating a weight for each of the plurality of amalgams based on predetermined factors: the weight corresponding to a prioritization level for each of the sub-elements of the amalgams in execution of the units and/or a set of rules based on predetermined factors.

In another aspect, the present invention relates to a tool for dynamically optimizing project management. The tool comprises a process definition module, a project division module, a path definition module, an amalgam definition module and a weight calculation module. The process definition module is adapted for dividing at least one project into a plurality of processes each including a series of units. The project division module is adapted for dividing at least one project into corresponding sub-elements. The path definition module is adapted for defining a plurality of possible paths: each path comprising at least one process. The amalgam definition module is adapted for defining a plurality of amalgams, each amalgam corresponding to one of the path to be followed by at least one sub-element. The weight calculation module is adapted for dynamically calculating a weight for each of the plurality of amalgams based on predetermined factors and/or a set of rules; the weight corresponding to a prioritization level for each of the sub-elements of the amalgams in execution of the units of the processes.

In another aspect, the tool further comprises a control module for moving amalgams from one unit to following unit. The tool may also further comprise a dashboard for graphically depicting status of the project, status of processes, status of units, etc. The tool may further comprise an input unit for allowing an operator to adjust priority of an amalgam manually, to modify parameters of a waiting line, and/or any other parameter of the process, unit, amalgam, sub-element, project, etc.

### BRIEF DESCRIPTION OF THE DRAWINGS

In the following description, the following drawings are used to describe and exemplify the present invention:
Figure 1 depicts a tree structure representing division of a project in accordance with the present invention;
Figure 2 is a block diagram representing exemplary processes in the context of cabinetry manufacturing;
Figure 3 is a block diagram representing exemplary multidimensional processes;
Figure 4 is depicts exemplary paths for the processes of Figure 2;
Figures 5a and 5b are flow diagrams of a method in accordance with an aspect of the present invention;
Figure 6 is a functional block diagram of a system in accordance with an aspect of the present invention; and
Figure 7 is functional block diagram of a tool in accordance with an aspect of the present invention.

### DETAILED DESCRIPTION OF THE INVENTION

The present invention relates to a tool, a method and a system for dynamically optimizing project management. For doing so, the present invention divides the work to be done in a plurality of processes, each having multiple units. Different paths are then created, each path corresponding to a unique series of units and transition units. Afterwards, the project is divided into sub-elements or items, which are the objectives of the project. To optimize management of the project, amalgams are created using predetermined rules, wherein each of the amalgam corresponds to a path to be followed by a group of sub-elements or items. To dynamically optimize management of the project, the amalgams are monitored and weights are calculated in real time for the amalgams of undergoing projects, wherein the weights correspond to priority levels to be given in the execution of the units of the processes to the sub-elements or items thereof. The weights can be calculated using for example fuzzy logic.

### Project

In the context of the present invention, the word project is used to refer to multiple types of projects, such as execution of services, development of a product, manufacturing of products, etc. All these types of projects have in common multidimensional processes, which sometimes have to be performed in parallel and/or sequentially. For such projects, traditional management tools or manufacturing tools have proven less than optimal in providing real-time and dynamic optimization, due to their inherent complexity. For clarity purposes, the following paragraphs will provide examples as to the operation of the present invention in the context of manufacturing of cabinets, but the present invention is not limited to this type of project.

For example, in the context of execution of services, the projects could correspond to services required by customers, each service requiring execution of processes and units by various groups and or individuals of a company. In the context of development of a product, each project could correspond to a product, a revision or a feature to be developed. As to the manufacturing of products, each project could then correspond to an order received. Thus the present invention provides a solution for optimizing project management, regardless of the industry, technology, and types of products or services produced.

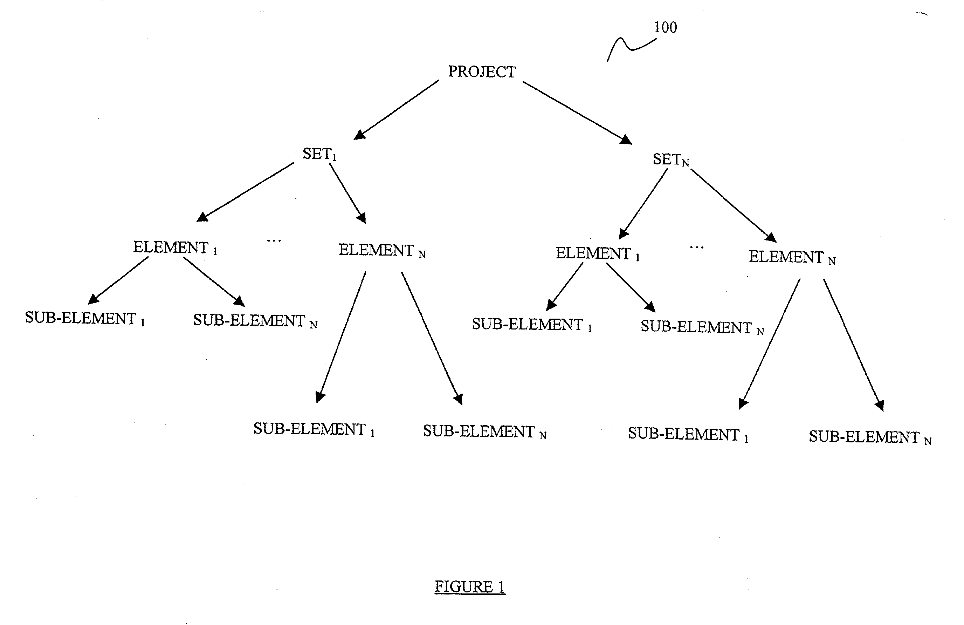

To better understand the components of a project, reference is now made to Figure 1, which depicts a tree structure representing division of a project 100 into layers. The project 100 may be divided into multiple layers, down to its finest possible granularity at the sub-element level. Thus, the project 100 may firstly be divided in sets_{1-N}, corresponding to a subset of elements intended to be together and sharing a characteristic, such as for example, for a cabinet manufacturing project, to kitchen and bathroom cabinets to be manufactured for a same client. The division into sets is not mandatory, but as will be appreciated later, a higher number of layers allows for a more precise management of the projects. The sets_{1-N} may further be divided into elements. The elements refer to configuration, and may include information such as quantity, code, model, format, and various other characteristics. Each element may for example correspond in the previously cited example, to a particular cabinet to be produced for the kitchen or the bathroom. Finally, the elements are then divided into sub-elements 110, which correspond to the finest granularity of component or task to be performed in the context of the project. For example, in the manufacturing industry, the sub-elements could correspond to raw material to be treated and assembled.

### Units and Meta units

A project to be completed must go through a series of units. Each unit corresponds to a task to be performed. Depending of the context in which the present invention is implemented, the task could consist for example of cutting wood, sanding wood, painting, drying, wrapping, shipping, defining specifications, coding, testing, debugging, implementing, receiving a client's request, analyzing the request, dispatching the request, implementing requested service, informing billing, verifying client's satisfaction, etc.

Thus each unit corresponds to a task to be performed. To optimize project management, it is advantageous in the implementation of the present invention but not essential thereto, to associate defining parameters to each unit, so as to appreciate the differences in time, effort, involvement, amount of material required, on a per unit basis. These defining parameters allow identifying units that could potentially become overloaded, and identify units that are bottlenecks. Alternatively, it is also possible to base the assessment on a number of amalgams or sub-elements or items to be treated by each unit. Either way, this assessment allows identification of expected remaining time for completion of an amalgam and thus prioritize the amalgams or sub-elements at risk of being late.

In some environments, it is required to group multiple units, performing the same tasks or a series of different tasks, into Meta units. In such case, the defining parameters are associated to the corresponding Meta unit, which allows controlling of a group of units instead of controlling of units independently. In such an embodiment, the entry line of a Meta unit is equal to the entry lines of all units which are forming the Meta unit, and an amalgam enters in the entry line of all the units of the Meta units simultaneously.

### Processes

Processes are composed of a combination of units. For example, in the context of development of a project, a process may correspond to defining specifications, another process may correspond to dividing the specifications into sub-modules, another process to coding the sub-modules, another process to testing the sub-modules, another process to verifying and approving the sub-modules. In such an example, it is quite obvious that multiple processes will be performed for the project, some in series, other in parallel. Each unit of the process corresponds to a specific function to be performed. In order to increase flexibility, it is possible that some amalgams go through some units of a process and do not pass through other units of the same process. In such an embodiment, it is not the process that dictates the order into which the units must be undertaken, but rather the path to be followed by the amalgam.

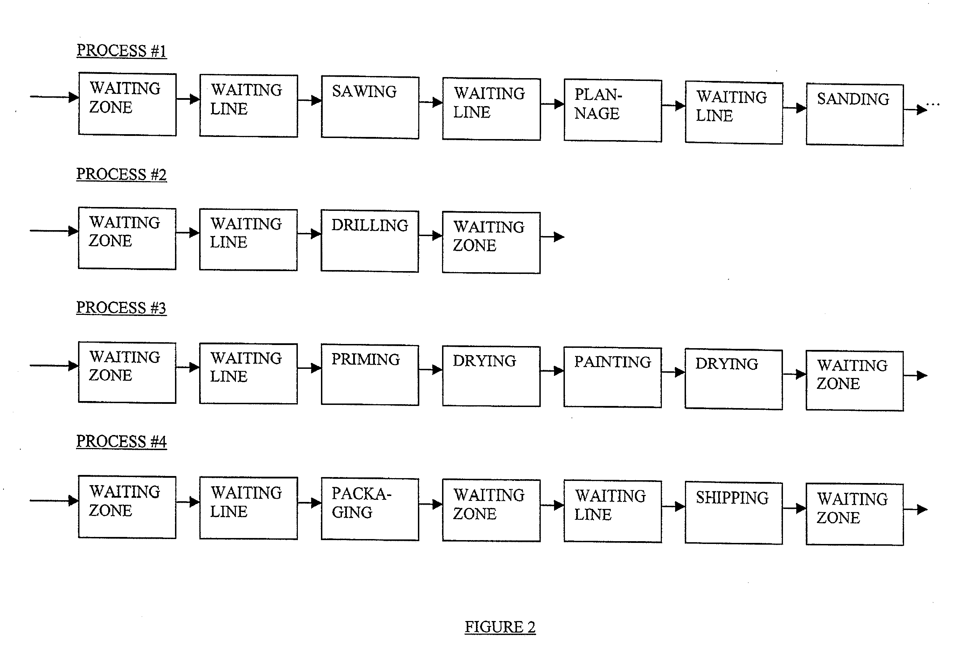

Reference is now made to Figure 2, which represents exemplary processes in the context of cabinetry manufacturing. Four such processes are depicted in Figure 2, but there are multiple other processes required for manufacturing cabinetry, and the four processes depicted are for example purposes only. The four processes depicted correspond respectively to woodcutting (process #1), drilling (process #2), painting (process #3) and packaging and shipping (process #4). Each of the four depicted processes each includes a series of units. The units correspond to the tasks to be performed. Additional units are also provided to take into account the realities of production, namely waiting zones 210 and waiting line 220. The waiting zones 210 correspond to periods during which the sub-element going through the process is waiting prior to continuing in the next unit. The waiting lines 220 represent the line of amalgams waiting to be processed by the next unit. Certain units are performed more rapidly then others, and it is thus useful for an optimized management of the project to take under consideration these delays, and prepare waiting lines to have amalgams ready for treatment by the unit. Another possible type of unit, not depicted on Figure 2, is a transition unit. The transition unit refers to unit required for handling amalgams finishing a process, and going to a subsequent process. The transition unit allows for the transfer from one process to the other, and thus avoids loosing sub-elements and proper handling of amalgams in transit in between processes. It is also possible that amalgams flow from one unit to a subsequent unit without going through waiting lines or transition units. Although Figure 2 depicts processes that are not overlapping, it should be clear that all possible combinations are encompassed by the present invention. For example, within one process, multiple various paths could be followed, some of which could flow through some of the same units. In such cases, the prioritization can be performed at the unit level. It should further be noted that in the present paragraph, the reference to amalgams could alternately be replaced by sub-elements, depending on the level of control and prioritization that is required.

Another example could be for example an amalgam for furniture, in a waiting line for a process. The amalgam for the furniture could be awaiting several amalgams of sub-elements, prior to initiating the process. Thus as soon as the last amalgam of awaited sub-elements is completed, the amalgam for furniture exits the waiting line and starts the process. Convertly, multiple amalgams for furniture could be in the waiting line awaiting for a same amalgam of sub-elements.

In a perfect world, waiting zones and waiting lines would not be required, as the amalgams could directly go from one unit of the process to a subsequent unit of the process, without delay. However, as two units do not require the same time to perform their tasks, it would be very expensive to add equipment to increase capacities for some units so as to avoid waiting zones and waiting lines. Additionally, in the case of some units, a delay may be required prior to entering into a subsequent unit, as for example for allowing drying.

Reference is now made to Figure 3, which depicts an exemplary division of processes, wherein some processes are performed sequentially, while others are performed in parallel for one project. The project starts with process #1, which upon completion, forwards some of the sub-elements to process #2, and other sub-elements to process #3. Upon completion of process #2, the sub-elements are then sent to process #4, while upon completion of process #3, the sub-elements are sent to process #5. Upon completion of processes #4 and #5, the sub-elements are sent to process #6 for completion of the project. Such organization of processes is generally referred as multidimensional, in opposition to linear processes, which consist of one single series of units, and processes.

In another aspect, multiple related amalgams, being handled by one process or different processes must be treated in parallel. For doing so, the prioritization is performed at a same unit through which all related amalgams must undertake.

### Paths

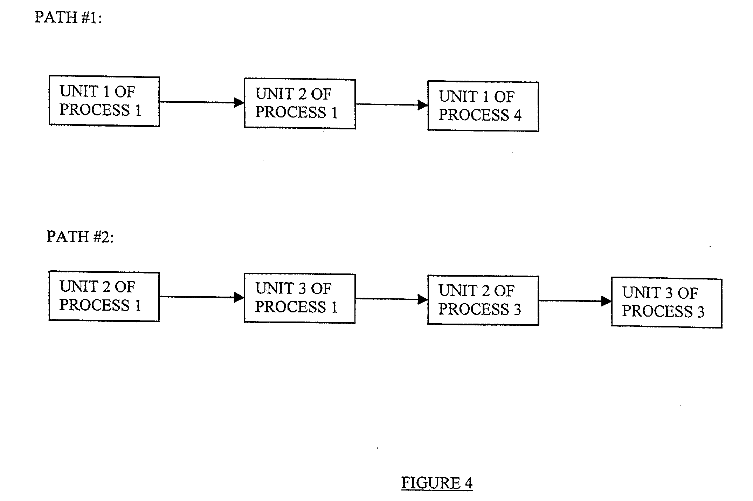

As each unit corresponds to a specific function, it is important to group these units in paths to enable a better follow-up of the evolution of the sub-elements throughout the project. Each path corresponds to a series of units (sometimes grouped into processes) to be performed from beginning to end of the project for one or multiple sub-elements. The grouping of units into paths can also be performed in a dynamic manner, i.e. decided on a per unit basis, so as to optimize the overall project realization. However, in the case of Just in Time applications, a grouping of units in paths prior to the initiating of the project is preferable. Reference is now made to Figure 4, which represents exemplary paths for the processes depicted on Figure 2. Path #1 correspond to starting with process #1, pursuing with process #3 and terminating with process #4. In contrast, path #2 starts with process #1, continues with process #2, pursues with process #3, and finishes with process #4.

As the paths represent the various units to be performed from beginning to the end of the project, it is possible to extrapolate that it would be possible to define as many paths as many possible combinations of units. However, such an extrapolation would not be realistic, as units are performed in certain order.

### Amalgams

As the present invention optimizes management of projects, and various projects can be handled simultaneously, the present invention provides another type of grouping: the amalgams. An amalgam corresponds to a group of sub-elements, sharing at least one characteristic, and following one same path. By compounding sub-elements into amalgams, it is possible to follow-up progress of the various sub-elements of one respective project, as instead of following-up on the sub-elements themselves, the verification is performed at a higher level, the amalgams. Amalgams can sometimes be represented as a physical realities: carts in a factory, piles of files, etc.. This representation allows an optimized treatment of similar elements to be handled simultaneously and transferred concurrently. Furthermore, the establishment of priority, and the reprioritization is more efficiently performed at a compounded level, rather than at the sub-element level, as it drastically reduces the quantity of data to be treated, while maintaining a very high level of flexibility and excellent precision. In a preferred manner, the prioritization and re-organizing of amalgams is performed for all projects considered simultaneously. Such simultaneous prioritization and re-organizing of all projects ensures optimal optimization of all projects and usage of capacities.

Here are some examples of amalgams, again referring to the cabinetry manufacturing:
- Sub-elements of a same set following a certain path;
- All sub-elements of a same project and a same color following a certain path;
- One kitchen cabinet of a project;
- Etc...

Various rules may be used to create amalgams. Those rules are based on desired level of prioritization, complexity of the projects, quantity of data to be monitored, number of different sub-elements to be treated, etc.

It is further possible to characterize each amalgam with a state, as to its current progression through its path. Various states could be used, such as for example material missing, to be redone, awaiting an event, awaited, ... These states can further assist in the prioritizing of the corresponding sub-elements through the calculation of weights.

### Method

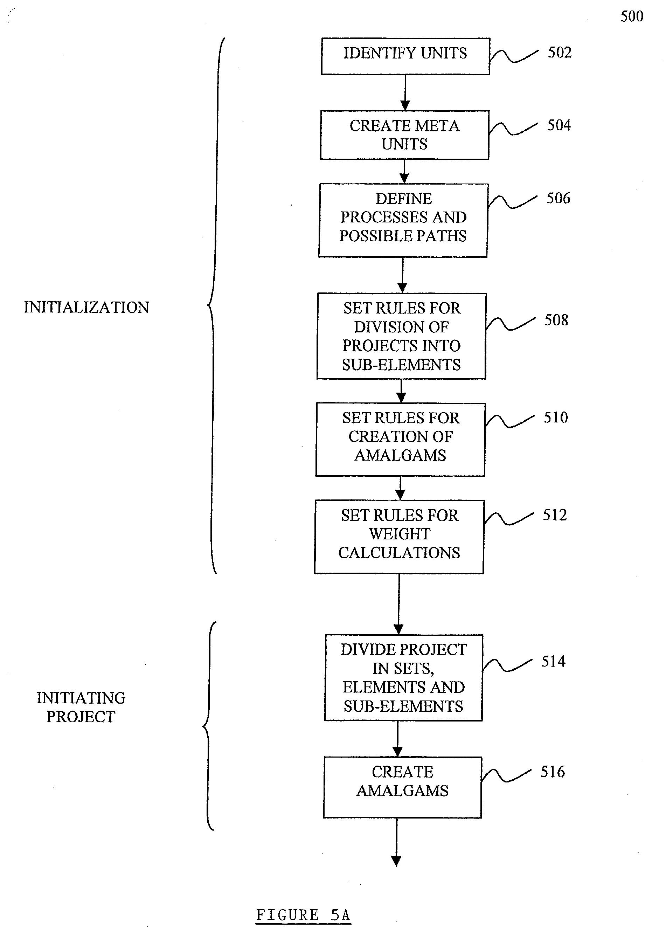

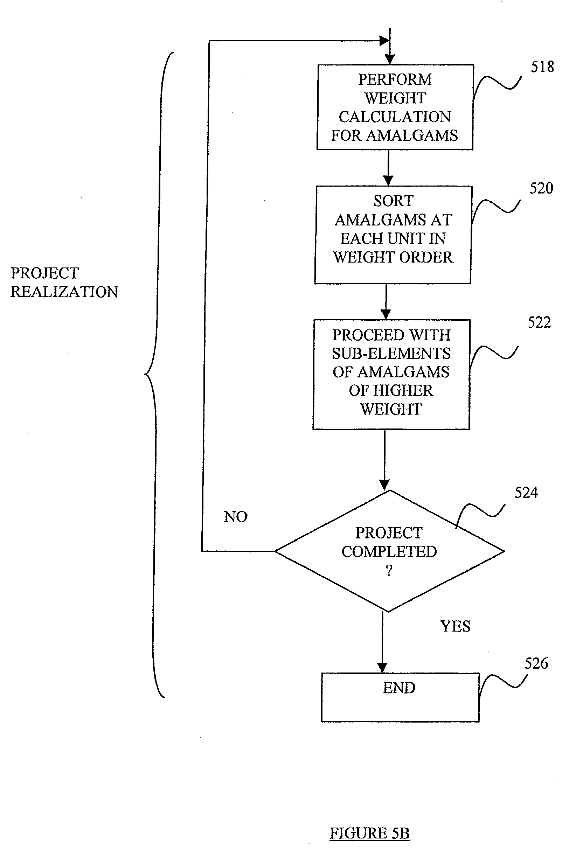

The present invention thus provides a method for dynamically optimizing project management. The method is depicted on Figures 5a and 5b, to which reference is made hereinafter. The method is generally divided into three main phases: initialization, project initiation and project realization. The initialization is performed once, prior to initiating and realizing projects. The initialization consists of identifying the context of the project and defining the rules to be applied for optimized realization of the projects. The order of introduction of the steps of the initialization category can be modified or alternated. Those steps include: identifying units (502), creating meta units (504) if necessary, defining processes, sub-processes and possible paths (506), setting rules for division of projects into sub-elements (508), setting rules for creating amalgams (510) and setting rules for weight calculations (512). The previous steps may be performed using stored data, and expert data systems, which deduce rules, based on stored data of previous projects handling. Alternately, the previous steps could be performed by a team of managers in defining preferred ways of working, with or without an expert system.

After completion of the initialization phase, it is possible to start dynamic management of projects. For doing so, the phase of initiating projects is started, and a first project is divided into sub-elements in accordance with the rules defined in the initialization phase. Thus all projects entering the initiating project phase will abide to the rules defined in the initialization phase. Then, the initiating phase will pursue with the creation of amalgams (516) in accordance with preset rules (510).

The following phase, the project realization phase, consists of a series of steps in which the sub-elements undergo the identified required processes, in an order of priority corresponding to calculated weights. For doing so, the project realization phase starts with a step of performing weight calculation for each of the amalgams (518). The details of weight calculation will be described further. The method then continues with a step of sorting amalgams at each unit in weight order. The purpose of the sorting is to prioritize amalgams in an orderly and optimized manner. Afterwards, the units proceed with the tasks required for the sub-elements. As the units are proceeding with the tasks, verification is made as to whether the project is complete, meaning whether all amalgams of one project are completed. If all amalgams of one project are completed, then that one project is completed, and the other projects pursued. For projects that are not completed, the steps 518-524 are performed dynamically and in real-time until completed.

As new projects are added to ongoing projects and ending projects, the method of the present invention may be ongoing for days, week, and months at a time.

### Weight calculations

Weights are calculated so as to prioritize execution of the work amongst the various amalgams of multiple ongoing projects. For doing so, the calculation of weights is performed in a dynamic manner, and preferably in real-time. The weight calculation may take under consideration various factors:
- time to completion;
- synchronization level for the sub-elements of a corresponding amalgam;
- synchronization level for the amalgams (of a same project for example) meeting at a specific unit;
- priority to be given to the corresponding project;
- status of units to be encountered along the path;
- defining parameters of units to be encountered along the path;
- delivery date;
- content of units;
- priority of set;
- priority of element;
- priority of amalgam;
- importance of client;
- delays;
- required recovery;

Multiple criteria can be used to determine weight, and ways of compounding the selected criteria are almost unlimited. However, the purpose of the calculated weight remains the same: prioritizing the treatment of sub-elements at the various units of the processes. Thus, it is important to note that although rules have been set in the initialization phase, it is often necessary to review some of these rules to resolve issues that have arisen in the realization of projects.

Another indirect advantage of the assignment of weights is the possibility to detect units that are overloaded, and units that are not busy. By knowing the level of work at each unit, it becomes possible to automatically change the defining parameters of that unit so as to avoid sending more sub-elements to that unit, and thereby balance the work amongst other available units.

A further indirect advantage of the assignment of weights of the present invention is that it allows removal of units for maintenance. By changing the defining parameters of the unit to be repaired, it is possible to automatically redirect the flow of sub-elements to other units with less detrimental defining parameters, so as to reach completion within defined requirements. In an alternate embodiment, it could be possible, instead of redirecting the flow of sub-elements to other units, to simply reduce priority of the sub-elements belonging to amalgams having to pass through units being maintained, so as to increase the priority of sub-elements following paths which do not involve the unit(s) to be maintained.

### System

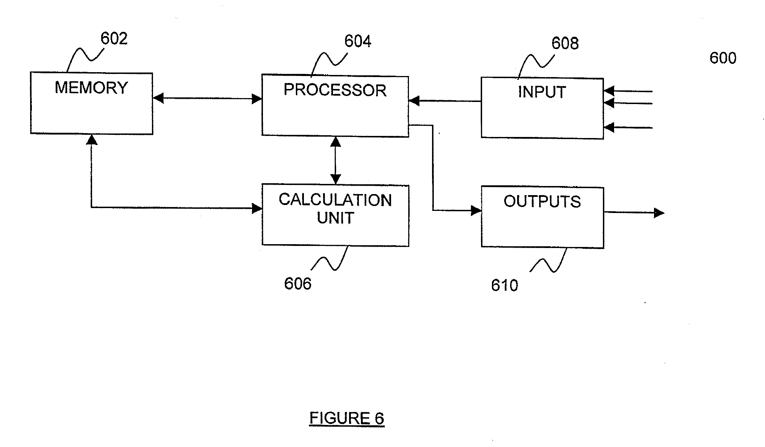

Reference is now made to Figure 6, which is a functional block diagram of a system of the present invention. The system 600 includes a memory 602, a processor 604, a calculation unit 606, an input unit 608 and an output unit 610. The memory 602 stores information related to the units and Meta units including their defining parameters. The memory 602 also stores the information pertaining to the defined process and paths. The memory 602 also stores the sets of rules governing the division of projects into sub-elements, the creation of amalgams, and the weight calculations.

The processor 604 accesses the memory 602 and applies the sets of rules, uses the processes and paths identified, and relies on the information on units and Meta units. The processor 604 receives through the input unit 608 projects to be handled by the system. The information on the project to be handled by the system may be entered by a user of the system or imported from another tool. The processor relies on the calculation unit 606 for calculating weights in accordance with the rules stored in the memory 602.

The weights calculated by the calculation unit 606 are provided to the corresponding units through the processor 604 and the output unit 610. Thus, the processor 604 performs dynamic weight calculation for each of the amalgams, and provides the information on the weights calculated to corresponding units on the path of those amalgams.

The input unit 608 is further adapted to receive information directly from units, so as to automatically update status or weight of a unit in the memory, based on the type of event reported by the unit. This closed loop approach allows automatic reconfiguration of the management of the project, so as to take under consideration events happening during the execution in a dynamic fashion.

The input unit 608 may further receive and handle user data. For example, a user may enter information on upcoming maintenance, which the input unit 608 forwards to the processor 604, which analyzes and stores the information in the memory 602 for further use by the calculation unit 606.

In the event that the projects are imported through a file or another tool, it is preferred to have a user authorize the importation of such projects, prior to realizing the imported project.

The system may further include a graphical dashboard which provides a status of various aspects of the management of projects undergoing by the system. For example, the dashboard could include:
- A list of projects awaiting initiation;
- Ongoing projects;
- A list of amalgams of one particular project;
- A list of amalgams located in one unit;
- A list of sub-elements part of one of the amalgams;
- Amalgams having very high priority;
- Etc.

Other functions could further be added to the system, such as blocking real-time updates of priorities, allowing skipping of units, etc.

### Tool

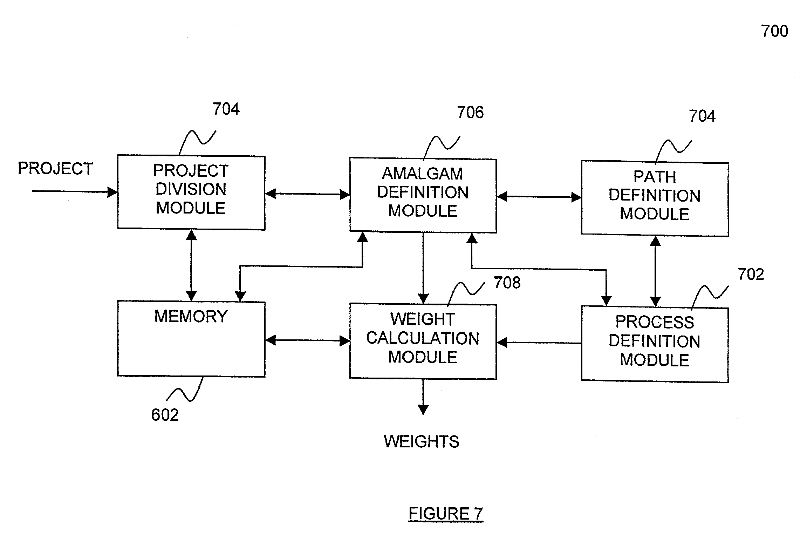

Reference is now made to Figure 7, which depicts a functional block diagram of a tool in accordance with an aspect of the present invention. The tool 700 preferably consists of software, which can be kept on a storage medium and installed on a computer. The tool 700 is composed of a process definition module 702 for identifying a plurality of processes each including a series of units. The tool 700 further includes a path definition module 704 for identifying possible paths each composed of at least one process. The tool also includes a project division module 704, for receiving a project to be managed, and dividing it into sub-elements.

The tool 700 further includes an amalgam definition module 706 for creating amalgams. The tool 700 also includes a weight calculation module for dynamically calculating a weight for each of the plurality of amalgams. The weight calculation module 708 is adapted to further send the calculated weights to corresponding units processing the various sub-elements of the amalgams. The project division module 704, the amalgam definition module 706 and the weight calculation module are adapted to access the memory 602, in which are stored the various applicable thereto.

Because of its great flexibility, the present invention allows dynamic and real time management of complex projects. Applications of particular interest include the manufacturing of customized products, the management of projects with multiple parties, the execution of services in large companies, etc.

The present invention has been described by way of preferred embodiments. It should be clear to those skilled in the art that the described preferred embodiments are for exemplary purposes only, and should not be interpreted to limit the scope of the present invention. The tool, method and system as described in the description of preferred embodiments can be modified without departing from the scope of the present invention. The scope of the present invention should be defined by reference to the appended claims, which clearly delimit the protection sought.

## Claims

1. A method for dynamically optimizing project management, the method comprising:
dividing at least one project in sub-elements;
defining a plurality of paths, each path comprising at least one unit;
defining a plurality of amalgams, each amalgam corresponding to one of the path to be followed by at least one sub-element; and
calculating a weight for each of the plurality of amalgams based on predetermined factors, the weight corresponding to a prioritization level for each of the sub-elements of the amalgams in execution of the units.

2. The method of claim 1, wherein the project consists of one of the following: manufacturing of products, development of products or execution of services.

3. The method of claim 1, wherein each of unit corresponds to a specific function to be performed in the context of the project.

4. The method of claim 1, wherein the unit includes waiting units and transfer units.

5. The method of claim 1 wherein the sub-elements correspond to raw material.

6. The method of claim 1, wherein some of the paths comprise multiple sequential units.

7. The method of claim 1, wherein the amalgams correspond to a group of sub-elements having a common characteristic and following a same path.

8. The method of claim 1, wherein the step of calculating the weight comprises:
evaluating a time to completion;
evaluating a synchronization level for the sub-elements of the amalgam; and
evaluating a priority to be given to the project.

9. The method of claim 1, wherein the calculating of the weight is performed dynamically in real-time.

10. A system for project management, the system comprising:
a memory for storing a plurality of processes and sets of rules, each process comprising a series of units, at least one set of rules defining rules to be applied for dividing of projects in sub-elements, at least one other set of rules defining rules to be applied for defining grouping of processes in paths, and at least one other set of rules defining rules to be applied for grouping of sub-elements into amalgams;
a processor for applying the at least one set of rules and dividing the projects in sub-elements, for applying the at least one other set of rules for grouping units in paths, and for applying the at least one other set of rules for grouping the sub-elements into amalgams; and
a calculation unit for calculating a weight for each of the plurality of amalgams based on predetermined factors, the weight corresponding to a prioritization level for each of the sub-elements of the amalgams in execution of the units.

11. The system of claim 10, wherein:
the projects consist of one of the following: manufacturing of products, development of products or execution of services;
each unit corresponds to a specific function to be performed in the context of the projects;
some of the paths comprise multiple sequential units; and
the amalgams correspond to a group of sub-elements having a common characteristic and following a same path.

12. The system of claim 10, wherein the calculating of the weight comprises:
evaluating a time to completion;
evaluating a synchronization level for the sub-elements of the amalgam;
evaluating a priority to be given to the corresponding project; and
calculating of the weight is performed dynamically in real-time.

13. The system of claim 10, further comprising a plurality of transformation units, each transformation unit corresponding to one of the units, each transformation unit being adapted for transforming the sub-elements in accordance with corresponding prioritization level.

14. A tool for dynamically optimizing project management, the tool comprising:
a process definition module for dividing at least one project into a plurality of processes each including a series of units;
a project division module for dividing at least one project into corresponding sub-elements;
a path definition module for defining a plurality of possible paths, each path comprising at least one process;
an amalgam definition module for defining a plurality of amalgams, each amalgam corresponding to one of the path to be followed by at least one sub-element; and
a weight calculation module for dynamically calculating a weight for each of the plurality of amalgams based on predetermined factors, the weight corresponding to a prioritization level for each of the sub-elements of the amalgams in execution of the units of the processes.

15. The tool of claim 18, wherein the process definition module, the project division module, the path definition module, the amalgam definition module and the weight calculation module are embedded within a software.
